# EUROPÄISCHE PATENTANMELDUNG

(11) **EP 2 508 089 A1**
(43) Veröffentlichungstag der Anmeldung: **10.10.2012**
(21) Anmeldenummer: 12161327.7
(22) Anmeldetag: 26.03.2012
(51) Int. Cl.: A41D 13/01, B62J 6/00, B60Q 1/26, G08B 5/00

(54) **Traggeschirr**

(30) Priorität: 09.04.2011 DE 202011005101 U
(71) Anmelder: Kupsch, Michael, 58579 Schalksmühle (DE)
(72) Erfinder: Kupsch, Michael, 58579 Schalksmühle (DE)
(74) Vertreter: Dörner, Kötter & Kollegen

(57) **Zusammenfassung**

Die Erfindung betrifft ein Traggeschirr (1) für Fahrradfahrer, das an der Kleidung eines Fahrradfahrers befestigbar ist und an dem Lichtsignalelemente angeordnet sind, die über wenigstens einen Schalter (5, 61) fernbedienbar sind, wobei die Lichtsignalelemente zumindest zwei Fahrtrichtungsanzeiger (2) umfassen.

## Beschreibung

Die Erfindung betrifft ein Traggeschirr für Fahrradfahrer nach dem Patentanspruch 1.

Neben Fußgängern gehört die Gruppe der Fahrradfahrer ebenfalls zur Gruppe der am meisten gefährdeten Teilnehmer im öffentlichen Straßenverkehr. Beide Gruppen verfügen regelmäßig über keinerlei aktiven Schutz, um Unfälle zu vermeiden. Sie sind darauf angewiesen, dass Lenker von Kraftfahrzeugen sie rechtzeitig bemerken und sich angemessen fortbewegen, um Unfälle zu verhindern. Zur besseren Sichtbarkeit von Fußgängern sowie Fahrradfahrern ist es bekannt, Bekleidungsstücke mit Reflektoren zu versehen, welche das Licht von Kraftfahrzeugen reflektieren und so auf die entsprechenden Verkehrsteilnehmer rechtzeitig aufmerksam machen. Bei der Gruppe der Fahrradfahrer kommt jedoch deren eigene Geschwindigkeit erschwerend hinzu. Dabei ist es für den beteiligten Verkehr äußerst wichtig, eine Fahrtrichtungsänderung des Fahrradfahrers frühzeitig zu erkennen. Gleiches gilt für eine plötzliche Verringerung der Geschwindigkeit des Fahrradfahrers. Zum Anzeigen eines Richtungswechsels strecken Fahrradfahrer einen Arm in die entsprechende Richtung aus, um diesen Wechsel an zu zeigen. Abgesehen davon, dass in dieser Zeit die Fahrsicherheit durch das einhändige Lenken beeinträchtigt ist, ist der ausgestreckte Arm insbesondere bei Dunkelheit oder schlechten Wetterverhältnissen für den Kraftfahrzeugführer oftmals nur schwer zu erkennen.

Hier will die Erfindung Abhilfe schaffen. Der Erfindung liegt die Aufgabe zu Grunde, ein Traggeschirr für Fahrradfahrer zu schaffen, welches ein frühzeitiges und deutlich sichtbares Anzeigen einer Fahrtrichtungsänderung ermöglicht. Gemäß der Erfindung wird diese Aufgabe durch die Merkmale des Schutzanspruchs 1 gelöst.

Mit der Erfindung ist ein Traggeschirr für Fahrradfahrer geschaffen, welches ein frühzeitiges und deutlich sichtbares Anzeigen einer Fahrtrichtungsänderung eines Fahrradfahrers ermöglicht. Über den wenigstens einen Schalter kann der Fahrradfahrer die zumindest zwei Fahrtrichtungsanzeiger ansteuern, ohne die Hände vom Lenker nehmen zu müssen.

Der Begriff "Traggeschirr" ist vorliegend sehr weit gefasst als an der Kleidung eines Fahrradfahrers anbringbare Einheit zu verstehen. Das Traggeschirr kann beispielsweise auch in Art eines Hosenträgers, als Weste oder Jacke oder auch in Form eines Kabelstrangs ausgebildet sein, über den mehrere Lichtsignalelemente miteinander verbunden sind. Die Lichtsignalelemente können dann über Verbindungselemente wir Klettverschlüsse, Druckknöpfe oder Magnetelemente an einem Kleidungsstück befestigbar sein. Insbesondere Magnetverschlüsse weisen den Vorteil auf, dass hier zur Befestigung des Traggeschirrs bzw. der einzelnen Lichtsignalelemente an einem Kleidungsstück keinerlei Vorrichtungen an dem Kleidungsstück erforderlich sind.

In Weiterbildung der Erfindung weist wenigstens ein Fahrtrichtungsanzeiger ein integriertes Tagfahrlicht auf. Hierdurch ist eine gute Sichtbarkeit des Fahrradfahrers gewährleistet.

In Ausgestaltung der Erfindung umfassen die Lichtsignale wenigstens ein Bremslicht, wobei das wenigstens eine Bremslicht über einen Schalter betätigbar ist, der mit dem Handbremshebel oder auch dem Rücktritt eines Fahrrades derart verbindbar ist, dass das Bremslicht bei Betätigung des Handbremshebels bzw. des Rücktritts angesteuert wird. Hierdurch ist eine deutlich sichtbare Anzeige eines Bremsvorgangs ermöglicht, ohne dass hierzu eine Hand vom Lenker des Fahrrades genommen werden muss.

In Weiterbildung der Erfindung ist ein Rücklichtelement angeordnet, in welches das Bremslicht bevorzugt integriert ist. Durch das bevorzugt permanent leuchtende Rücklicht ist die Sichtbarkeit des Fahrradfahrers weiter erhöht.

In weiterer Ausgestaltung der Erfindung ist eine Steuereinrichtung angeordnet, die mit den Lichtsignalelementen verbunden ist, wobei die Steuereinrichtung mit einem Empfangsmodul mit einer drahtlosen Schnittstelle verbunden ist, wobei wenigstens ein drahtloses Sendemodul vorgesehen ist, über das die Lichtsignalelemente ansteuerbar sind. Hierdurch ist eine drahtlose Ansteuerung der Lichtelemente bei freier Anordnung eines entsprechenden drahtlosen Sendemoduls ermöglicht. Dabei ist das wenigstens eine Sendemodul bevorzugt lösbar an einem Fahrradlenker befestigbar. Hierdurch ist eine sichere Handhabung des Sendemoduls erzielt. Vorteilhaft ist wenigstens ein Sendemodul zur Ansteuerung der Fahrtrichtungsanzeiger und ein Sendemodul zur Ansteuerung des wenigstens einen Bremslichts vorgesehen.

In weiterer Ausgestaltung der Erfindung ist das wenigstens eine Sendemodul mit einer Piezotechnik ausgestattet. Hierdurch erübrigt sich eine separate Spannungsversorgung für das Sendemodul. Der Spannungsimpuls für das Blinksignal wird mechanisch durch Drücken des Piezo-Tasters erzeugt. (Dieser Effekt ist beispielsweise von Piezofeuerzeugen bekannt. Hier wird in einem Piezozünder über einen Hammer ein plötzlicher großer Druck verwendet, um eine kurzzeitige hohe elektrische Spannung zu erzeugen. Die Funkenentladung zündet dann die Gasflamme.)

In Weiterbildung der Erfindung ist ein Akkumulator angeordnet, über den die Lichtsignalelemente gespeist sind. Hierdurch ist eine zuverlässige und wideraufladbare Stromversorgung der Lichtelemente gewährleistet. Der Akkumulator ist bevorzugt in dem Rücklichtelement angeordnet.

In Ausgestaltung der Erfindung ist ein Modul zur Überwachung der Akkumulatorladung und/ oder zur Leitungsprüfung der elektrischen Leitungen angeordnet. Hierdurch ist ein frühzeitiges Erkennen einer möglichen Unterbrechung der Stromversorgung der Lichtsignalelemente ermöglicht.

In Ausgestaltung der Erfindung ist ein Display vorhanden, über das die aktuellen Leuchtzustände der Leuchtsignale der Elemente darstellbar sind und das am Lenker eines Fahrrades befestigbar ist. Hierdurch ist der jeweilige Status der Leuchtsignalelemente vom Fahrradfahrer leicht abzulesen. So ist beispielsweise schnell erkennbar, ob ein Fahrtrichtungsanzeiger nach Beendigung des Fahrtrichtungswechsels noch aktiviert ist.

In weiterer Ausgestaltung der Erfindung ist ein Akustikmodul angeordnet, das mit der Steuereinrichtung verbunden und derart eingerichtet ist, dass bei Aktivierung eines Fahrtrichtungsanzeigers ein dem Blinksignal entsprechendes Akustiksignal. Beispielsweise in Form eines nachgebildeten Relaisgeräuschs, erfolgt. Hierdurch ist Hierdurch ist eine ständige akustische Information des Fahrradfahrers über der Zustand der Fahrtrichtungsanzeiger gewährleistet. Einem fehlerhaften Fahrtrichtungssignal durch einen versehentlich nach einem Abbiegevorgang nicht deaktivierten Fahrtrichtungsanzeiger ist so entgegengewirkt. Vorteilhaft ist das Akustiksignal mit der Steuereinheit derart verschaltet, dass bei Ausfall eines Lichtsignalelements oder bei nachlassender Spannung des Akkumulators ein Warnsignal erfolgt.

In Weiterbildung der Erfindung ist wenigstens ein Mikrofon angeordnet, das mit der Steuereinheit verbunden ist, wobei eine bevorzugt als Bluetootheinheit ausgebildete Funkeinheit angeordnet ist, über die ein externes Gerät, wie beispielsweise ein Mobiltelefon, ansteuerbar ist. Die Steuereinheit ist dabei bevorzugt derart ausgebildet, dass die Lichtsignalelemente oder auch über die Funkeinheit angekoppelte externe Geräte sprachsteuerbar sind. Hierdurch ist gewährleistet, dass der Fahrradfahrer durchgehend beide Hände am Lenker belassen kann.

Andere Weiterbildungen und Ausgestaltungen der Erfindung sind in den übrigen Ansprüchen angegeben. Ein Ausführungsbeispiel der Erfindung ist in der Zeichnung dargestellt und wird nachfolgend im Einzelnen beschrieben. Es zeigen:
Fig. 1 die schematische Darstellung eines Traggeschirrs für Fahrradfahrer;
Fig. 2 die schematische Darstellung eines Traggeschirrs in einer weiteren Ausführungsform
   a) in der Vorderansicht;
   b) in der Rückansicht;
Fig. 3 die schematische Darstellung eines Traggeschirrs in einer dritten Ausführungsform
   a) in der Vorderansicht;
   b) in der Rückansicht;
Fig. 4 die schematische Darstellung eines fünfteiligen Traggeschirrs in einer vierten Ausführungsform zur Befestigung an einem Oberbekleidungsstück.

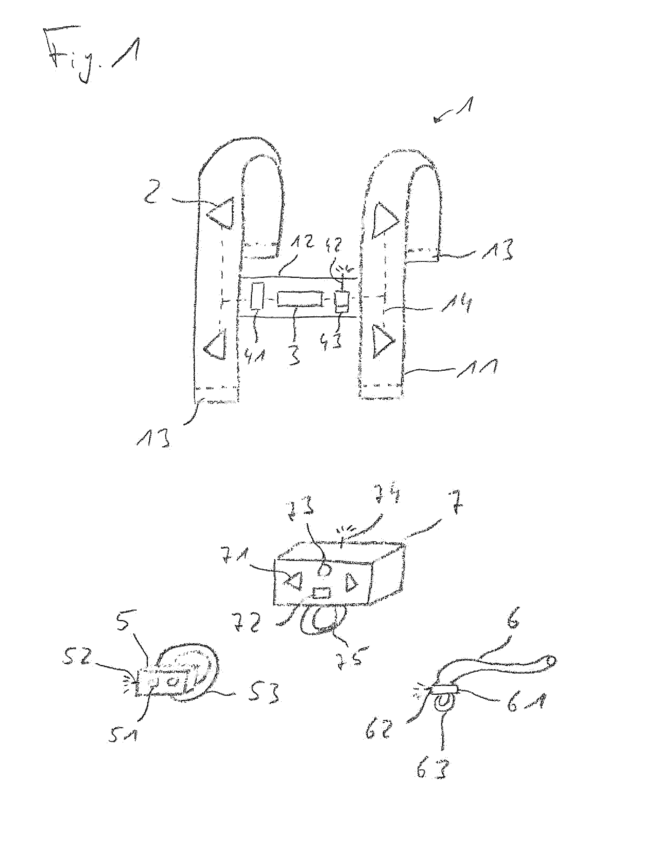

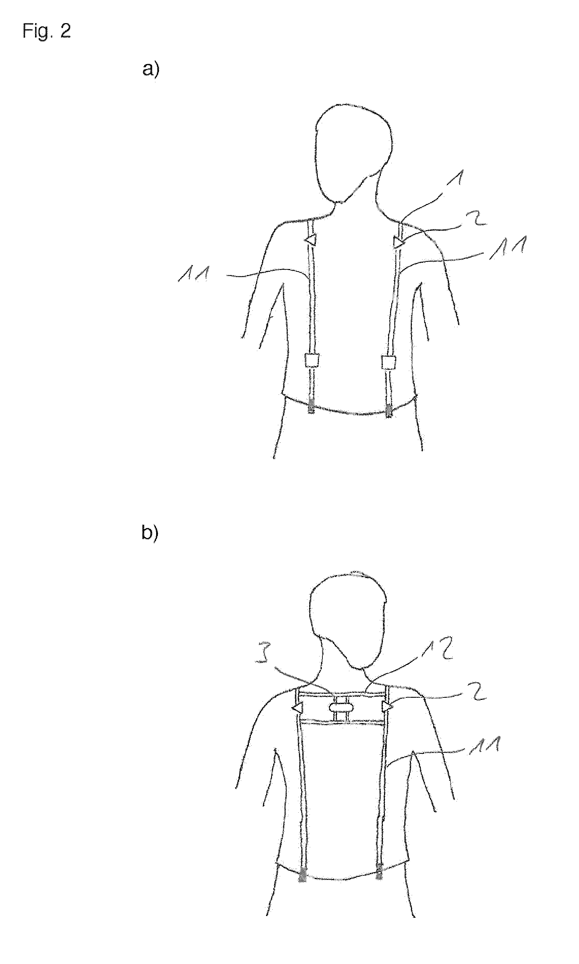

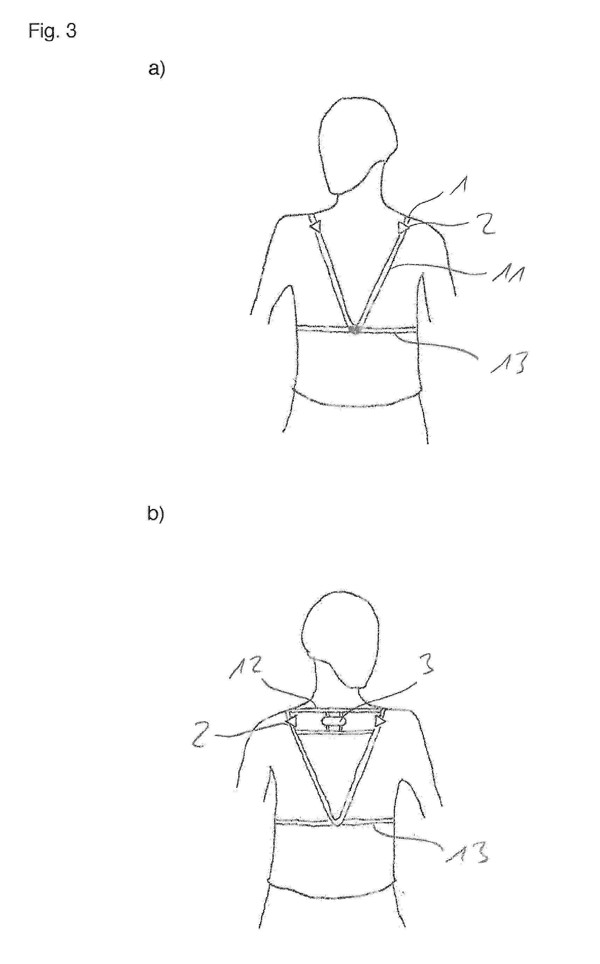

Das als Ausführungsbeispiel gewählte Traggeschirr 1 für Fahrradfahrer gemäß Figur 1 besteht aus zwei Längsträgern 11, die über einen Querträger 12 miteinander verbunden sind. Endseitig sind die Längsträger 11 mit einem Magnetelement 13 versehen. Die Längsträger 11 sind im Ausführungsbeispiel aus versteiften Textilstreifen gebildet. Alternativ können auch elastische Streifen angeordnet sein, welche mittels Klemmen in Art eines Hosenträgers mit dem Hosenbund des Fahrradfahrers verbindbar sind (vgl. Figur 2) oder die über ein quer angeordnetes Halteband 13 gehalten sind (vgl. Figur 3). Beidseitig des Querträgers 12 sind auf den Längsträgern 11 parallel zueinander Fahrtrichtungsblinkelemente 2 angeordnet. Die Fahrtrichtungsblinkelemente 2 sind dreieckförmig ausgebildet und derart angeordnet, dass jeweils eine Spitze des Fahrtrichtungsblinkelements 2 nach außen gerichtet ist. Die Fahrtrichtungsblinkelemente 2 sind mit gelben transluzenten Kunststoffblenden versehen, hinter denen LEDs angeordnet sind.

Auf dem Querträger 12 des Traggeschirrs 1 ist mittig eine rechteckförmige Bremsleuchte 3 angeordnet. Die Bremsleuchte 3 ist mit einer roten transluzenten Kunststoffblende versehen, hinter der LEDs angeordnet sind.

Die Fahrtrichtungsblinkelemente 2 sowie die Bremsleuchte 3 sind über Leitungen 14 mit einem Steuermodul 4 verbunden. Das Steuermodul 4 ist über einen Akkumulator 41 gespeist und umfasst ein Sende-/ Empfangsmodul 42 sowie ein Überwachungsmodul 43. Das Sende-/ Empfangsmodul 42 ist im Ausführungsbeispiel nach dem Bluetooth-Standard ausgebildet und dient der drahtlosen Verbindung mit einem Fahrtrichtungsschalter 5, einem Bremslichtschalter 6 sowie einem Display 7. Als Überwachungsmodul 43 dient zum einen der Überwachung der Leitungen 14 und zum anderen der Überwachung des Ladezustandes des Akkumulators 41. Das Steuermodul 4 ist derart eingerichtet, dass es entsprechend den Signalen des Fahrtrichtungschalters 5 bzw. des Bremslichtschalters 61 die Fahrtrichtungsblinkelemente 2 bzw. die Bremsleuchte 3 ansteuert.

Der Fahrtrichtungsschalter 5 umfasst Bedienelemente 51 zur Aktivierung der rechten bzw. der linken Fahrtrichtungsblinkelemente 2. Anstelle von 2 Bedienelementen 51 kann auch - wie bei Motorrädern üblich - ein Schiebehebel zur Ansteuerung der rechten bzw. der linken Fahrtrichtungsblinkelemente 2 angeordnet sein. Der Fahrtrichtungsschalter 5 weist ein Sendemodul 52 zur drahtlosen Verbindung mit dem Sende-/ Empfangsmodul 42 des Steuermoduls 4 auf. Weiterhin ist eine Befestigungsschelle 53 zur Befestigung des Fahrtrichtungsschalters 5 an dem Lenker eines Fahrrades angeordnet.

Der Bremslichtschalter 61 ist - wie bei Motorrädern bekannt - in den Bremshebel 6 eines Fahrrades integriert. Er weist ein Sendemodul 62 zur drahtlosen Verbindung mit dem Sende-/ Empfangsmodul 42 auf. Über eine Befestigungsschelle 63 ist der Bremslichtschalter 61 gemeinsam mit dem Bremshebel 6 an einem Fahrradlenker befestigbar. Die Sendemodule 52, 62 des Fahrtrichtungsschalters 5 bzw. des Bremshebels 6 sind im Ausführungsbeispiel nach dem Bluetooth-Standard ausgebildet.

Das Display 7 dient der Überwachung der Fahrtrichtungsblinkelemente 2 sowie der Bremsleuchte 3 und ist über ein Empfangsmodul 74 mit dem Sende-/ Empfangsmodul 42 des Steuermoduls 4 verbunden. Das Display 7 umfasst eine Fahrtrichtungsanzeige 71, eine Bremslichtanzeige 72 sowie eine Warnleuchte 73. Das Steuermodul 4 ist derart eingerichtet, dass es die Zustände der Fahrtrichtungsblinkelemente 2 und der Bremsleuchte 3 sowie mögliche Warnsignale des Überwachungsmoduls 43 über das Sende-/ Empfangsmodul 42 an das Empfangsmodul 74 des Display 7 weiterleitet, wo die entsprechenden Zustände für den Fahrradfahrer leicht erfassbar dargestellt werden. Zur Befestigung des Displays 7 an dem Lenker eines Fahrrades ist weiterhin eine Befestigungsschelle 75 angeordnet.

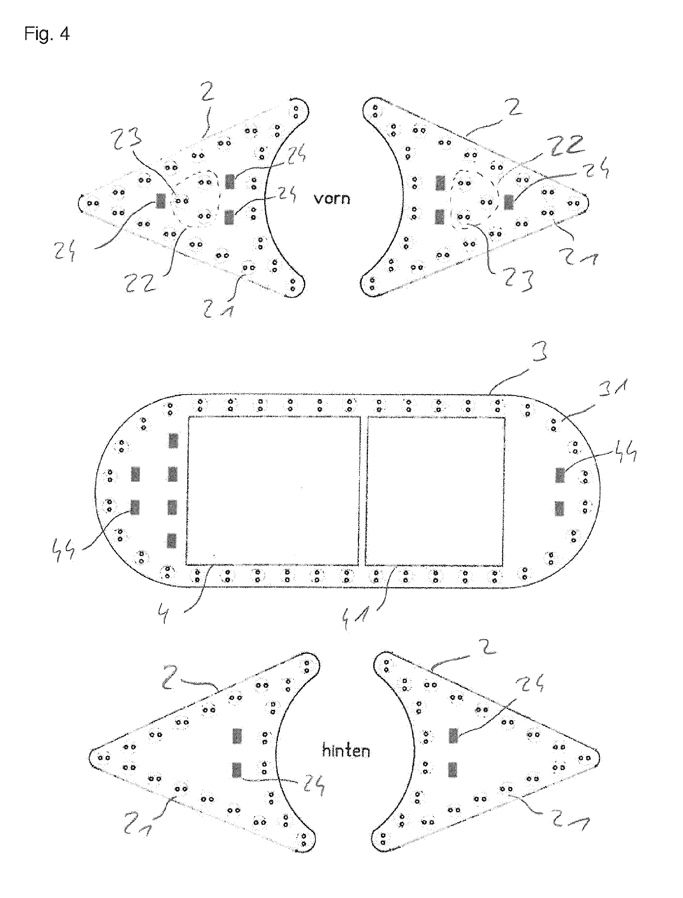

Im Ausführungsbeispiel gemäß den Figur 4 ist das Traggeschirr durch fünf Lichtsignalelemente 2, 3 gebildet, die über - nicht dargestellte - dünne, vorzugsweise in einer flexiblen Gummilasche angeordneten Drähten miteinander verbunden sind. Die Lichtsignalelemente sind über - nicht dargestellte - rückseitige angeordnete Klettstreifen beispielsweise an einer Weste befestigbar. Im vorderen Schulterbereich ist jeweils rechts und links ein mit gelben SMD-LEDs 21 bestücktes, pfeilförmiges Fahrtrichtungsblinkelement 2 angeordnet. In diesen beiden vorderen Fahrtrichtungsblinkelementen ist zusätzlich jeweils ein permanentes Tagfahrlicht 22 integriert, das aus weißen SMD-LEDs 23 gebildet ist. Über Kontakte 24 sind die Fahrtrichtungsblinkelemente 2 mit dem Steuermodul 4 über die - nicht dargestellten - dünnen Drähte mit dort angeordneten Kontakten 44 verbunden. Im dem rückseitigen Schulterbereich sind ebenfalls jeweils rechts und links ein pfeilförmiges Fahrtrichtungsblinkelement 2 angeordnet. Zwischen diesen rückseitigen Fahrtrichtungsblinkelementen 2 ist ein mit roten SMD-LEDs 31 versehenes, permanent leuchtendes Rücklichtelement 3 angeordnet, in dem ein Steuermodul 4 zur Ansteuerung der Lichtsignalelemente 2, 22, 3 sowie ein Akkumulator 41 zu deren Spannungsversorgung integriert ist. Die Aufladung des Akkumulators 41 erfolgt über einen - nicht dargestellten - Mini-USB-Steckeranschluss. Alternativ kann die Aufladung auch über Schraubenkontakte erfolgen. Zusätzlich oder alternativ kann auch ein Solar-Travel-Akkupack angeordnet sein, das sich während einer Fahrradfahrt über Solarzellen selbstständig wieder auflädt.

Die Lichtsignalelemente 2, 3 sind als Vollgummi-Vergusselemente ausgebildet. Als Leuchtmittel kommen SMD-LEDs 21, 23, 31 zum Einsatz. Alternativ können die Lichtsignalelemente 2, 22, 3 auch als Polycarbonat-Hartschalen ausgebildet sein.

Die drei Lichtsignalelemente 2, 3 im rückwärtigen Bereich können in einer alternativen Ausführungsform auch in einem einzigen Rückenmodul integriert sein, bei dem die äußeren beiden Fahrtrichtungsblinkelemente 2 über einen elastischen Steg mit dem zwischen diesen angeordneten Rücklichtelement 3 verbunden sind. Zur Betätigung der Fahrtrichtungsblinkelemente 2 sind weiterhin zwei - nicht dargestellte - Fahrtrichtungsfunktaster angeordnet, welche beidseitig eines Fahrradlenkers befestigbar sind und die mit einer in dem Steuermodul 4 integrierten Bluetooth- Schnittstelle korrespondieren. Die Funktaster sind mit einer Piezotechnik ausgestattet, welche durch einen Drückvorgang die für das Sendesignal erforderliche elektrische Spannung bereitstellt. Die Befestigung der Funktaster an einem Fahrradlenker kann auf unterschiedliche Arten erfolgen, beispielsweise über ein Klettband oder auch über eine Rastvorrichtung, wobei hier ein jeweils entsprechendes Gegenstück fest an dem Fahrradlenker montiert werden kann, wodurch eine definierte Position für die Funktaster festlegbar ist.

Das Steuermodul 4 ist derart ausgebildet, das durch ein erstes Signal eines Funktasters ein zugeordnetes Fahrtrichtungsblinkelement 2 aktiviert und durch ein erneutes Signal desselben Funktasters wieder deaktiviert wird. Zur akustischen Wahrnehmung eines aktivierten Fahrtrichtungsblinkelements kann zusätzlich ein Akustikmodul, vorzugsweise in Schulternähe angeordnet sein, über das dem Blinksignal entsprechende Akustiksignale ausgegeben werden können. Über ein solches Akustikmodul kann weiterhin auch ein Warnsignal bei Ausfall einzelner Lichtsignalelemente 2, 3 oder auch bei einem Spannungsabfall des Akkumulators 41 erfolgen. Dabei können beispielsweise für unterschiedliche Spannungszustandsbereiche in Klang und/oder Intensität unterschiedliche Akustiksignale erfolgen.

Bei zusätzlicher Anordnung eines Mikrofons ist das Akustikmodul weiterhin zur Sprachausgabe eines über Bluetooth angekoppelten Mobiltelefons einsetzbar. Auf diese Weise ist die Realisierung einer Freisprecheinrichtung ermöglicht. Über das Mikrofon könnte weiterhin eine Sprachsteuerung des Mobiltelefons oder auch von Lichtsignalelementen implementiert werden.

Im Ausführungsbeispiel ist das Steuermodul weiterhin derart eingerichtet, dass bei gleichzeitigem Drücken beider Fahrtrichtungsfunktaster eine Warnblinkfunktion mit gleichzeitigem Blinken aller Fahrtrichtungsblinkelemente 2 aktivierbar ist. Darüber hinaus ist im Ausführungsbeispiel ein - nicht dargestelltes - Speichermodul angeordnet, das mit dem Steuermodul verbunden ist. Dieses Speichermodul ist derart eingerichtet, dass während einer Fahrradfahrt alle durch den Fahrradfahrer aktivierten Aktionen aufgezeichnet werden. Ist die maximale Speicherkapazität erreicht, werden die ältesten Aufzeichnungen automatisch gelöscht, um neuen Speicherplatz zu generieren.

Als weitere Erweiterung kann das rote, permanent leuchtende Rücklicht zusätzlich als Bremslicht eingerichtet sein. Hierzu bedarf es der technischen Einbindung der Hand- oder Rücktrittbremsen des Fahrrades, wir bereits zuvor beschrieben.

## Patentansprüche

1. Traggeschirr (1) für Fahrradfahrer, das an der Kleidung eines Fahrradfahrers befestigbar ist und an dem Lichtsignalelemente angeordnet sind, die über wenigstens einen Schalter (5, 61) fernbedienbar sind, wobei die Lichtsignalelemente zumindest zwei Fahrtrichtungsanzeiger (2) umfassen.

2. Traggeschirr nach Anspruch 1, **dadurch gekennzeichnet, dass** wenigstens ein Fahrtrichtungsanzeiger (2) ein integriertes Tagfahrlicht aufweist.

3. Traggeschirr nach Anspruch 1 oder 2, **dadurch gekennzeichnet, dass** die Lichtsignalelemente wenigstens ein Bremslicht (3) umfassen, wobei das wenigstens eine Bremslicht (3) über einen Schalter (61) betätigbar ist, der mit dem Handbremshebel (6) eines Fahrrades derart verbindbar ist, dass das Bremslicht (3) bei Betätigung des Handbremshebels (6) angesteuert wird.

4. Traggeschirr nach Anspruch 3, **dadurch gekennzeichnet, dass** ein Rücklichtelement angeordnet ist, das bevorzugt in dem Bremslicht (3) integriert ist.

5. Traggeschirr nach einem der vorgenannten Ansprüche, **dadurch gekennzeichnet, dass** eine Steuereinrichtung (4) angeordnet ist, die mit den Lichtsignalelementen verbunden ist, wobei die Steuereinrichtung (4) mit einem Empfangsmodul (42) mit einer drahtlosen Schnittstelle verbunden ist, wobei wenigstens ein drahtloses Sendemodul (52, 62) vorgesehen ist, über das die Lichtsignalelemente ansteuerbar sind.

6. Traggeschirr nach Anspruch 5, **dadurch gekennzeichnet, dass** ein Sendemodul (52) zur Ansteuerung der Fahrtrichtungsanzeiger (2) und ein Sendemodul (62) zur Ansteuerung des wenigstens einen Bremslichts (3) vorgesehen sind.

7. Traggeschirr nach Anspruch 5 oder 6, **dadurch gekennzeichnet, dass** das wenigstens eine Sendemodul (52, 62) über eine Piezotechnik betrieben ist.

8. Traggeschirr nach einem der vorgenannten Ansprüche, **dadurch gekennzeichnet, dass** ein Akkumulator (41) angeordnet ist, über den die Lichtsignalelemente gespeist sind.

9. Traggeschirr nach einem der vorgenannten Ansprüche, **dadurch gekennzeichnet, dass** ein Modul (43) zur Überwachung der Ladung das Akkumulators (41) und/oder zur Leitungsprüfung der elektrischen Leitungen (14) angeordnet ist.

10. Traggeschirr nach einem der vorgenannten Ansprüche, **dadurch gekennzeichnet, dass** Mittel zur lösbaren Befestigung an der Kleidung des Fahrradfahrers angeordnet sind.

11. Traggeschirr nach einem der vorgenannten Ansprüche, **dadurch gekennzeichnet, dass** ein Display (7) vorhanden ist, über das die aktuellen Leuchtzustände der Lichtsignalelemente darstellbar sind und das am Lenker eines Fahrrades befestigbar ist.

12. Traggeschirr nach einem der Ansprüche 5 bis 11, **dadurch gekennzeichnet, dass** ein Akustikmodul angeordnet ist, das mit der Steuereinrichtung verbunden ist und das derart eingerichtet ist, dass bei Aktivierung eines Fahrtrichtungsanzeigers ein dem Blinksignal entsprechendes Akustiksignal erfolgt.

13. Traggeschirr nach Anspruch 12, **dadurch gekennzeichnet, dass** wenigstens ein Mikrofon angeordnet ist, das mit der Steuereinheit verbunden ist, wobei eine bevorzugt als Bluetootheinheit ausgebildete Funkeinheit angeordnet ist, über die einexternes Gerät, bevorzugt ein Mobiltelefon ansteuerbar ist.

14. Traggeschirr nach Anspruch 13, **dadurch gekennzeichnet, dass** die Steuereinheit derart ausgebildet ist, dass die Lichtsignalelemente und/oder über die Funkeinheit angekoppelte externe Geräte sprachsteuerbar sind.

15. Traggeschirr nach einem der vorgenannten Ansprüche, **dadurch gekennzeichnet, dass** ein Speichermodul angeordnet ist, das mit der Steuereinheit verbunden ist und das derart ausgebildet ist, dass die Aktivitäten der Lichtsignalelemente über die Zeit speicherbar sind.
